# EUROPEAN PATENT APPLICATION

(11) **EP 3 772 030 A1**
(43) Date of publication of application: **03.02.2021**
(21) Application number: 20188783.3
(22) Date of filing: 30.07.2020
(51) Int. Cl.: G06Q 10/06

(54) **SYSTEMS AND METHODS TO UTILIZE FLIGHT MONITORING DATA**

(30) Priority: 01.08.2019 IN 201941031139
(71) Applicant: Honeywell International Inc., Morris Plains, NJ 07950 (US)
(72) Inventor: KHAN, Kalimulla, Morris Plains, NJ 07950 (US); JAYATHIRTHA, Srihari, Morris Plains, NJ 07950 (US); JELLA, Radhakrishna, Morris Plains, NJ 07950 (US); SRINIVASAN, Vijayvenkatesh, Morris Plains, NJ 07950 (US); SAHOO, Subhransu, Morris Plains, NJ 07950 (US); P, Boopathi, Morris Plains, NJ 07950 (US)
(74) Representative: Dennemeyer & Associates S.A.

(57) **Abstract**

A computer-implemented method for integration of data into flight data monitoring comprises receiving quick access recorder data from an aircraft; receiving flight management system data from the aircraft; combining the quick access recorder data and the flight management system data to form combined data; and displaying the combined data on a user device.

## Description

### TECHNICAL FIELD

Various embodiments of the present disclosure generally relate to a flight data monitoring (FDM) analysis.

### BACKGROUND

Airlines and operators perform data analytics as part of their Flight Data Monitoring (FDM) program using data from a Quick Access Recorder (QAR) of an aircraft. FDM data analytics involves processing the flight data against Standard Operating Procedures (SOPs) and aircraft envelope limits to identify any events or exceedances. This analysis is used for any investigation or for trending events in the airline operations. However, this analysis lacks consideration of contextual information and key flight information. Furthermore, FDM data and software is typically confined to the safety department and is designed as an analyst tool to process flight data in line operations. During the entire process, the pilots are typically not shown flight data for flights they have flown unless they are called in for an investigation or request the same with appropriate authorizations. The present disclosure is directed to overcoming these limitations by leveraging various aspects of using flight data for analytics and contextual data, among other goals and aspects of this disclosure.

The background description provided herein is for the purpose of generally presenting the context of the disclosure. Unless otherwise indicated herein, the materials described in this section are not prior art to the claims in this application and are not admitted to be prior art, or suggestions of the prior art, by inclusion in this section.

### SUMMARY OF DISCLOSURE

According to certain aspects of the disclosure, systems and methods are disclosed to provide appropriate data for FDM analysis and furthermore provide access to the FDM analysis for benchmarking and training.

In one example, a computer-implemented method for integration of data into flight data monitoring comprises receiving quick access recorder data from an aircraft; receiving flight management system data from the aircraft; combining the quick access recorder data and the flight management system data to form combined data; and displaying the combined data on a user device.

In an example, computer-implemented system for integration of data into flight data monitoring comprises a memory having processor-readable instructions stored therein; and at least one processor configured to access the memory and execute the processor-readable instructions, which when executed by the processor configures the processor to perform functions for: receiving quick access recorder data from an aircraft; receiving flight management system data from the aircraft; combining the quick access recorder data and the flight management system data to form combined data; and displaying the combined data on a user device.

A non-transitory computer-readable medium containing instructions for vehicle collision notification and avoidance comprises instructions for receiving quick access recorder data from an aircraft; receiving flight management system data from the aircraft; combining the quick access recorder data and the flight management system data to form combined data; and displaying the combined data on a user device.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIGS. 1A and 1B depict an overview of the system for integrating FMS data with QAR data, according to one aspect of the present disclosure.
FIG. 1C depicts exemplary outputs o the system of FIGS. 1A and 1B.
FIGS. 2A and 2B depict flowcharts of exemplary methods for integrating FMS data with QAR data, according to one aspect of the present disclosure.
FIGs. 3A-3E depict exemplary user interfaces for contextual data integration in flight safety analysis, according to one aspect of the present disclosure.
FIG. 4 depicts a flowchart of an exemplary method of integrating QAR data with contextual information.
FIG. 5 depicts a flowchart of an exemplary method of the pilot FDM system, according to one aspect of the present disclosure.
FIGs. 6A and 6B depict exemplary user interfaces of the pilot FDM system, according to one aspect of the present disclosure.
FIG. 7 depicts an exemplary computer device or system, in which embodiments of the present disclosure, or portions thereof, may be implemented

### DETAILED DESCRIPTION OF EMBODIMENTS

FMS programming and usage errors are a major category in "pilot input/control" issues cited in the Aviation Safety Reports (ASRs).

One of the major limitations of the FDM data analytics process is the lack of sufficient Flight Management System (FMS) data for the analysis. Critical FMS data, such as, for example, the pilot entered active flight plan, performance initialization data, and atmospheric data, are typically unavailable for FDM analysis. This information is useful (and may be critical to) the analysis of various FDM events and incidents, as well as identifying any issues in FMS usage and programming. FMS programming and usage errors are a major category in "pilot input/control" issues cited in the Aviation Safety reports (ASRs).

Therefore, there exists a need for an authenticated method to retrieve and correlate FMS data with corresponding flight (QAR) data and various other flight data sources, including operational flight plan and flight time-specific weather or traffic information. The current disclosure describes systems and methods that integrate FMS data into the FDM analysis by integrating it with the QAR data and/or other types of data, such as those discussed below. Information including, but not limited to, FMS period trajectory 4D reports, flight summary information, and/or pilot button push data is retrieved and combined with the QAR time series data to provide an integrated data source for FDM analysis. Various combinations and subsets of data, including the categories provided above, are retrieved and combined.

Furthermore, as discussed above, FDM software typically provides limited integration of contextual data during the flight due to which the analysts source most of the contextual data and integrate it with the QAR data outside of the FDM software for analysis. The disclosure integrates QAR data with contextual data in order to facilitate FDM.

A need also exists to provide a personalized pilot FDM system which may provide visualization, statistical analysis and key performance indicators (KPI) related to the flight crew's line operations. The pilot FDM system may be intuitive and may provide a quick reflection of the pilot operations with benchmarking against peers and industry averages.

Although the avionics context is referenced herein, the embodiments are not limited to the avionics context. For example, the embodiments may additionally pertain to travel on land or by water.

The subject matter of the present description will now be described more fully hereinafter with reference to the accompanying drawings, which form a part thereof, and which show, by way of illustration, specific exemplary embodiments. An embodiment or implementation described herein as "exemplary" is not to be construed as preferred or advantageous, for example, over other embodiments or implementations; rather, it is intended to reflect or indicate that the embodiment(s) is/are "example" embodiment(s). Subject matter can be embodied in a variety of different forms and, therefore, covered or claimed subject matter is intended to be construed as not being limited to any exemplary embodiments set forth herein; exemplary embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware, or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of exemplary embodiments in whole or in part.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

In this disclosure, the term "based on" means "based at least in part on." The singular forms "a," "an," and "the" include plural referents unless the context dictates otherwise. The term "exemplary" is used in the sense of "example" rather than "ideal." The term "or" is meant to be inclusive and means either, any, several, or all of the listed items. The terms "comprises," "comprising," "includes," "including," or other variations thereof, are intended to cover a non-exclusive inclusion such that a process, method, or product that comprises a list of elements does not necessarily include only those elements, but may include other elements not expressly listed or inherent to such a process, method, article, or apparatus. Relative terms, such as, "substantially" and "generally," are used to indicate a possible variation of ±10% of a stated or understood value.

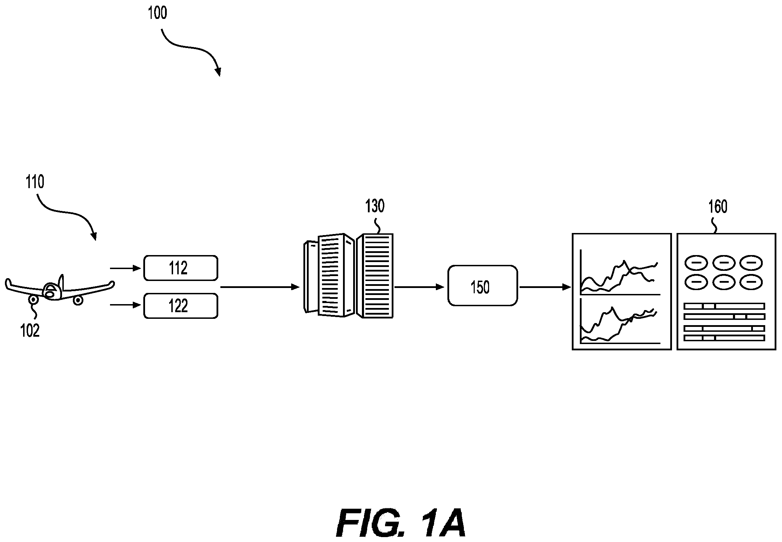

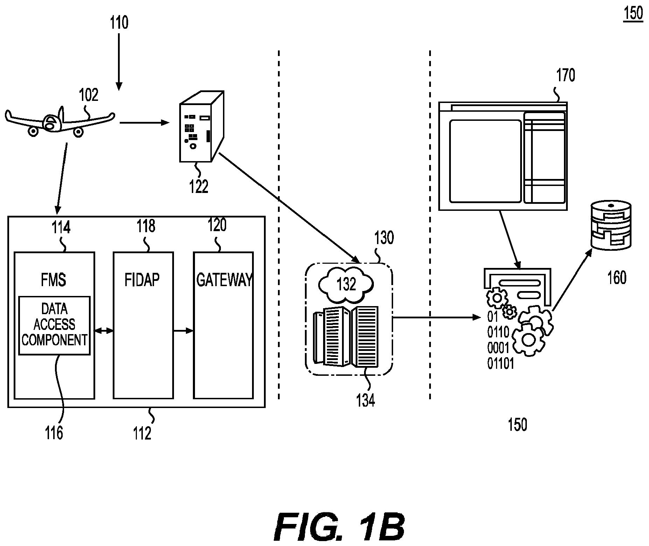

FIG. 1A depicts a system 100 for integrating flight data, including FMS data and QAR data, as well as an overview of a flow of data through system 100. Although system 100 particularly references flight data, it will be appreciated that aspects of system 100 are also usable in other contexts, including land and water travel. FIG. 1B depicts further details of a flow of data through system 100, along with further details of components of system 100. Although FMS data and QAR data are referred to herein, it will be appreciated that additional and/or alternative data types may be integrated using system 100. FIGS. 1A and 1B will be referred to together in the description below.

System 100 includes one or more vehicle system(s) (and/or suppliers of such systems) 110, cloud or ground data repository 130, and data integration engine 150. In one example, vehicle system 110 is an aircraft system and repository 130 is an airline cloud or ground data repository 130. Alternatively, vehicle system 110 and repository 130 may be associated with other types of vehicles-e.g., cars, trucks, trains, buses, or boas.

In embodiments, vehicle system 110 is onboard a vehicle 102. In example embodiments, vehicle system 110 is a cockpit system or includes a cockpit system. Vehicle system 110 includes a computer system 112, including one or more processors, memory, and/or configuration databases. In embodiments where vehicle system 110 is an aircraft system, computer system 112 includes, for example, an FMS 114, which includes a data access component 116, an FMS Internal Data Access Partition ("FIDAP") 118, and a gateway 120. FIDAP 118 functions function as a data connectivity partition. Gateway 120 is connectable to external components via any suitable connection (e.g., Wi-Fi, wired connections, Bluetooth, or other connection mechanisms). Although FMS 114, FIDAP 118, and gateway 120 are shown as separate components, it will be appreciated that FMS 114, FIDAP 118, and/or gateway 120 may be combined and/or elements of one another. For example, in one example, FIDAP 118 and/or gateway 120 are portions of FMS 114.

FMS 114 is any type of computer that acts as a type of navigation equipment. In examples, FMS 114 is configured to receive input data from a variety of other navigational instruments. Other navigational instruments include aircraft sensors, such as inertial navigation instruments, radio navigational instruments, including one or more very high frequency omnidirectional radio range (VOR) systems, and global positioning system (GPS). Aircraft sensors generate various data, including altitude data, heading data, air data reference, radar altimeter data, etc. Using this data and/or data from the GPS, the FMS generates position information, and further engages in in-flight management of a flight plan, which is be stored in an FMS database (or database of vehicle (e.g., FIDAP 118)). Using FMS database data, FMS 114 calculates a course for the aircraft to follow, including a lateral flight plan and/or a vertical flight plan. In examples, FMS 114 is coupled to a display inside the aircraft, such as a cockpit display. FMS 114 is used by an operator (e.g., a pilot) to control an aircraft. For example, the operator may revise a flight plan or make revisions to a flight using FMS 114.

As shown in FIG. 1B, data access component 116 is in two-way communication with FIDAP 118 (or another element of vehicle system 110). Alternatively, data access component 116 may be in one-way communication with FIDAP 118 In one example, FIDAP 118 is in one-way communication with gateway 120. Alternatively, FIDAP 118 and gateway 120 may be in two-way communication. In an example, gateway 120 and data access component 116 are in communication via FIDAP 118. Alternatively or additionally, data access component 116 may be in direct communication with gateway 120. Alternative configurations of cockpit system are possible under the scope of the disclosure. For example, data access component 116 may be omitted, and FMS 114 may be in communication with FIDAP 118 via another component, or FIDAP 118 may be a component of FMS 114.

Some of the components shown in FIGS. 1A and 1B may be omitted. For example, as discussed above, gateway 120 may be omitted. Vehicle system 110 may additionally or alternatively include other components, such as a flight management function ("FMF") partition.

Vehicle system 110 also includes a QAR 122. QAR 122 passively gathers data (without intervention from a vehicle operator, such as a pilot). QAR 122 provides easy access to data recorded thereon. In some examples, QAR 122 provides a real-time data stream (provides/gathers real-time data) regarding vehicle travel (e.g., regarding a flight or other travel segment). In at least some examples, data from QAR 122 may be non-identical to data received from FMS 114. Alternatively, other types of data recorders may be used with system 100, including data recorders configured to gather data from land-based or water-based vehicle.

Vehicle system 110 gathers data from vehicle 102. In an example, as shown by an arrow in FIG. 1B, computer system 112 gathers from FMS 114 data including operator-entered travel plans (e.g., flight plans), performance initialization data, weather data, atmospheric data, flight control inputs, and/or other data. Computer system 112 has the capability to gather any data that is processed or displayed by computer system 112, including FMS 114, over the course of travel.

As shown by an arrow in FIG. 1B, QAR 122 gathers raw flight data pertaining to parameters of a vehicle during flight (e.g., speed, position, altitude, etc.) and/or interactions between an operator or vehicle 102 and external systems (e.g., air traffic control or a dispatcher). QAR 122 gathers any data that is customarily gathered by a quick access recorder or any other type of flight recorder. QAR 122 provides access to raw flight data via, for example, USB, cellular networks, or flash memory cards. QAR 122 obtains data from the flight data acquisition unit (FDAU).

Data repository 130 includes a database at least one of a cloud-based datacenter 132 or a ground-based data datacenter 134. Alternatively, data repository 130 may be housed onboard a vehicle. Data repository 130 includes any suitable features. Data repository 130 is in communication with vehicle system 110 (e.g., with gateway 120) and data integration engine 150 (discussed in further detail below) via any suitable mechanism(s) (e.g., Wi-Fi, Bluetooth, wired connections, or other suitable connections). Data repository 130 includes memory, one or more processors, or other elements.

Data integration engine 150 includes any suitable structures (e.g., processors, short- and long-term storage) for accomplishing the algorithms described below. Data integration engine 150 incorporates security and/or authentication mechanisms to provide secure data processing and secure data storage. Further details of data integration engine 150 will be described below.

Arrows in FIGS. 1A and 1B show a flow of data through system 100. For example, in the context of a system to be used for flight data, vehicle system 110 obtains FMS 114 data from vehicle 102 (e.g., an airplane). In an example, FMS 114 data is obtained prior to, during, and/or after a flight. Data from FMS 114 may be collected and/or stored in real time. Any of the types of data described above with respect to vehicle system 110 may be gathered and stored. In an example, during a flight giving rise to FMS 114 data, revisions are made to flight plans or to other aspects of the flight. FMS 114 data (e.g., an FMS profile) is collected (e.g., using FIDAP 118) prior to and after each revision, in order to ensure that the relevant FMS 114 data is collected. FMS 114 data collected includes, for example, FMS period trajectory 4D reports, flight summary information, and/or pilot button push data.

In one example, computer system 112 or a portion of computer system 112 (e.g., FIDAP 118) collects and stores data from FMS 114. The portion of computer system 112 (e.g., FIDAP 118) has access to the common memory of FMS 114 (e.g., via data access component 116). Alternatively, a separate computer system (having memory, a processor, and a configuration database) may collect and store data from FMS 114. Data from FMS 114 is continually monitored (by computer system 112 or another computer. Computer system 112 or another computer snapshots the data during the progression of a flight (potentially including both air and ground portions), based on pre-configured conditions, as specified in the configuration database. A time stamp is associated with the snapshotted or otherwise collected data.

Following or during a flight, data from QAR 122 is collected by vehicle system 110. Data from QAR 122 may additionally or alternatively be collected in real-time. In examples, QAR data is collected from FDAU.

The data (including FMS 114 data QAR 12 data) is transmitted by vehicle system 110 (computer system 112 and QAR 122) to data repository 130. In one example, gateway 120 is used to transmit data from FMS 114, directly or indirectly (e.g., via FIDAP 118). In one example, FMS 114 data and QAR 122 data are separately transmitted or streamed to data repository 130. In another example, FMS 114 data and QAR data 122 are streamed or otherwise transmitted concurrently. In an alternative example, the data from one or more of FMS 114 or QAR 122 may be physically retrieved.

Data from data repository 130 and/or other sources is transmitted to data integration engine 150. In examples, data integration engine 150 receives operational flight program ("OFP") data. As shown in FIG. 1B, OFP data is transmitted to data integration engine 150 from an airline or operator's flight planning system 170. In other examples, OFP may be first stored in vehicle system 110 and/or data repository 130. In other examples, OFP may be transmitted to data integration engine according to other methods.

Data integration engine 150 uses the data from vehicle system 110 (including FMS 114/FIDAP 118 and QAR 122), along with OFP, to generate merged data files 160, which generate, for example, a variety of reports (e.g., flight reports). Data files160 and/or the produced reports integrate, combine, or process data, such as data from FMS 114, QAR 122, OFP data from flight planning system 170, and/or aeronautical data sources including contextual data including weather, traffic etc. Data integration engine 150 performs a process to validate the time stamps checks with various flight information systems and data integrity of the flight. In examples, data integration engine 150 processes the data from QAR 122 and FMS 114 to determine categories of data and to translate between the data sources to identify corresponding types of data. For example, data integration engine 150 may identify data representing velocity, altitude, pitch, or other characteristics across QAR 122 and FMS 114. The data sources may be registered so as to correlate parameters from different data sources (e.g., QAR 122 and FMS 114) at varying times.

Data integration engine 150 determines where flight data (e.g., data from QAR 122 or OFP data) should be blended with FMS 114 data layers, along with computed parameter layers and unique identification traces representing a pre-specified situation of a flight, along with other levels of contextual information. Resulting data file 160 and/or reports output from the data integration engine 150 are a unified collection and representation of various distributed data sets with unique identification traces set for recognizing patterns. Data integration engine 150 provides blended layers of FMS 114 data for each in-flight revision or any pre-defined condition warranting data analytics.

Data file 160 and/or reports are stored in a database with unique flight identification information and are readily available to devise various analytical models and data analytics. Data integration engine 150 includes adequate security/authentication mechanisms for secured data blending and safe repository of the data. Data integration engine 150 may perform various analyses, including analysis for errors in programming of FMS 112. Data integration engine 150 outputs various types of reports, discussed in additional detail below. The output of data integration engine 150 includes time series integration of FMS 114 and QAR 122 data. Data integration engine 150 co-relates mission details from FMS 114 for FDM analysis. Furthermore, the combined data permits identification of errors in programming of FMS 112 and other usage errors.

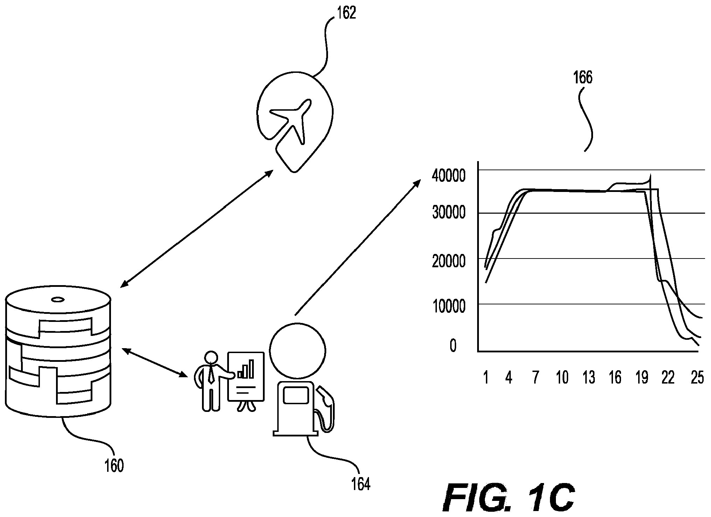

As shown in FIG. 1C, data from data file 160 is used to generate a variety of reports, including, for example, flight safety reports 162 (including flight safety information), fuel management service reports 164 (including fuel management information), and advanced insight report 166. As shown by the arrows in FIG. 1C, data from various reports is sometimes useful in generating other reports. For example, advanced insight report 166 includes insights for safety and efficiency enhancement and utilizes information from fuel management service report 164. Furthermore, data/information regarding fuel management is retrieved and stored in data file 160. The reports shown in FIG. 1C are merely exemplary. Other types of reports may be generated. The reports may indicate programming errors and provide visualization of a blended FMS 114 flight plan, weather data, performance data/trajectory during the FDM investigation.

FIGS. 1A-1C are provided merely as examples. Other examples are possible and may differ from what was described with regard to FIGS. 1A-1C. The number and arrangement of devices and networks shown in FIGS. 1A and 1B are provided as an example. In practice, there may be additional devices, fewer devices and/or networks, different devices and/or networks, or differently arranged devices and/or networks than those shown in FIGS. 1A and 1B. Furthermore, two or more devices shown in FIGS. 1A and 1B may be implemented within a single device, or a single device shown in FIGS. 1A and 1B may be implemented as multiple, distributed devices. Additionally, or alternatively, a set of devices (e.g., one or more devices) may perform one or more functions described as being performed by another set of devices of FIGS. 1A and 1B.

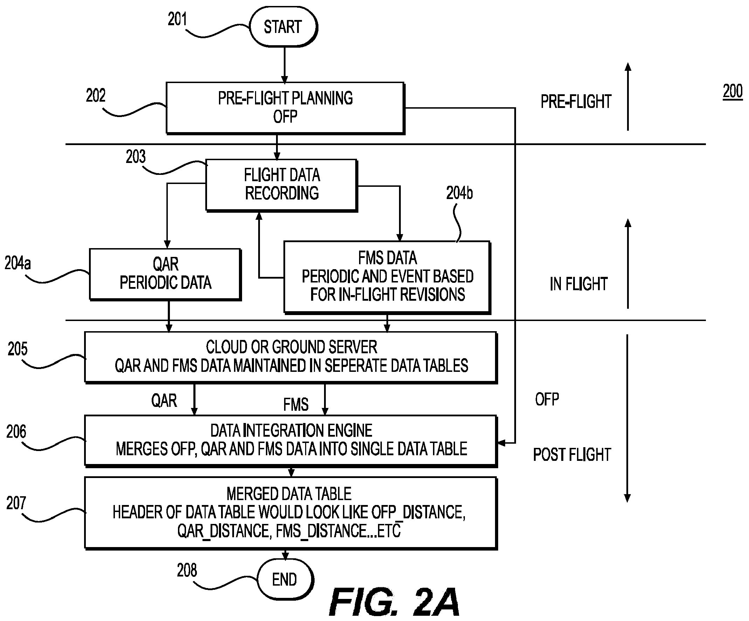

FIG. 2A depicts a flowchart of an exemplary method 200 for integrating FMS 114 data with QAR 122 data, according to one aspect of the present disclosure. Method 200 begins at the preflight portion of the data collection at step 201. At step 202, pre-flight planning and/or OFP may be established.

Method 200 then proceeds to the in-flight phase of data collection. At step 203, flight data recording is performed. The recording includes FMS 114 data at step 204a. For example, FIDAP 118 may record data from FMS 114. Recording of data from FMS 114 is both periodic (e.g., at pre-determined intervals) and event-based (e.g., based on flight plan changes). For example, as described above, FMS 114 data may be collected before and after each in-flight revision. In step 204b, data is recorded by QAR 122 (e.g., periodically, at pre-determined intervals).

The process proceeds to the post flight phase of data collection. At step 205, QAR 122 data and FMS 114 data is transmitted and stored at a cloud or ground server, such as repository 130, with the QAR and FMS data maintained in separate data tables. At step 206, the data integration engine 150 receives the QAR 122 and FMS 114 data from repository 130 and merges OFP, QAR 122 data, and FMS 114 data into a single data table. The format of the data table is supportive of airline software solutions.

OFP is obtained, for example, from pre-flight planning performed in step 202. In step 207, the merged data table includes a header that provides information (including information regarding single parameter, such as distance) from various sources, such as FMS 114 data (e.g., FMS distance), QAR 122 data (e.g., QAR_distance), and OFP (e.g., OFP_distance). Multiple columns may include the same parameter (e.g., speed) gathered from the different data sources (e.g., FMS 114, QAR 122, and/or OFP). For example, the header may include columns for data from each of FMS 114, QAR 122, and OFP. Data integration engine 150 may perform registration to combine the data from different sources (e.g., FMS 114 and QAR 122) at different time stamps.

Data integration engine 150 analyzes the data from the merged data table to analyze areas of interest during FDP. In examples, measurements of the same parameters (e.g., distance) from the different sources (e.g., QAR 122 data, FMS data 114, and/or OFP) are compared, contrasted, and/or combined to determine values relevant to FDP. For example, errors from one or more data sources may be detected. Additionally or alternatively, data integration engine combines first parameters obtained from a first data source (e.g., QAR 122) with second parameters from a second data source (e.g., FMS 114). The second parameters, in at least some cases, are not available from the first data source (e.g., QAR 122). Therefore, consideration of data from the second data source (e.g., FMS 114) provides additional context and/or detail that would be unavailable from consideration of data from the first data source alone. The merged data table provides differential insights in area of flight safety, fuel efficiency, and/or other areas of concerns. The method process may then proceed to the end at step 208.

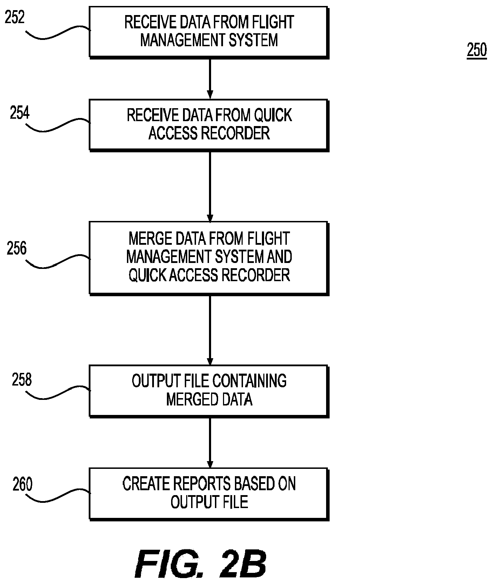

FIG. 2B illustrates another method 250 of integrating QAR 122 data with FMS 114 data. Method 250 is a streamlined version of method 200 from the perspective of data integration engine 150. In step 252, data integration engine 150 receives data from flight management system 114. The data received in step 252 includes any of the types of data described above. In step 254, data integration engine receives data from QAR 122. Steps 252 and 254 need not occur in the order depicted and may occur in reverse order or occur simultaneously. In step 256, data integration engine 150 merges the data received from FMS 114 with the data received from QAR 122. In step 258, data integration engine 150 outputs a file containing the merged data (e.g., data file 160). In step 260, data integration engine 150 creates reports based on the output, merged file. The reports can include any of the types of reports discussed above.

The steps of method 250 are exemplary and non-exclusive. Additional steps may be performed without altering the substance of the method, and steps may be combined or omitted.

In another embodiment, contextual data may be combined with QAR data by a system. During FDM, contextual information of a flight or event provides important context. In some circumstances, lack of consideration of the contextual information results in an incorrect assessment. Such relevant contextual information includes a location of the aircraft (e.g., on a runway or taxiway), weather (including winds), and/or traffic. Contextual information includes information obtained from, for example, air traffic control (ATC), sources of weather information (e.g., NOAA), databases of airport information, or RADAR

The disclosure provides an automated method/system to link the contextual information directly into the QAR data (including time series data) and use the same for statistics and analysis and also process the QAR data with other sources of information like the operational flight plan, scheduling system, weather/traffic services and avionics information. The disclosed method/system provides an intuitive, interactive contextual data extraction and visualization on a flight path which closely resembles the avionics configuration of the specific aircraft under assessment.

When a specific flight or a flight segment is being investigated, the user is provided with a set of options of what contextual data needs to be rendered, which includes, for example, but is not limited to time, season, visibility, wind, weather parameters, and/or traffic parameters. In examples, the user is given the option to select one or more sets of contextual data. Alternatively, certain type of data may be automatically considered. Alternatively, the user may select a type of report, and the system/method may automatically integrate the relevant types of data in order to generate that report.

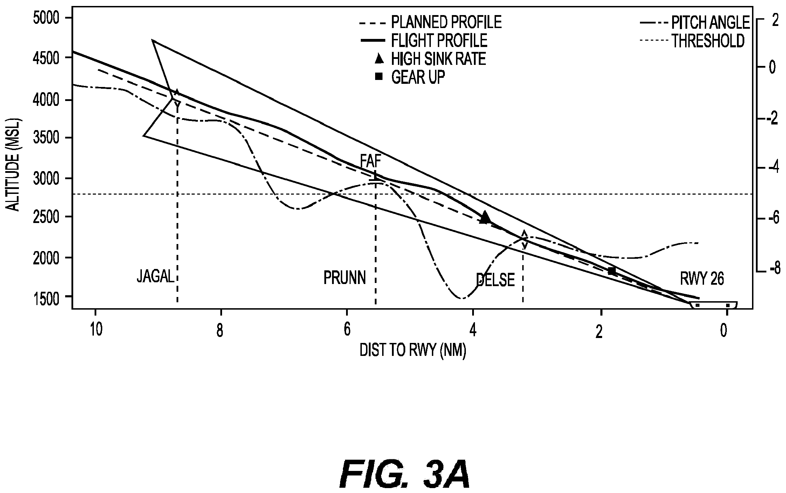

Various reports or displays, such as the examples depicted in FIGS. 3A-3E are provided to the user. In addition to the visualization, the contextual information is used for statistical analysis to add additional filters in the analysis for better co-relation of events and the circumstances that led to the events. The contextual information is presented in a way to ease the co-relative analysis, which is a primary task of a data analyst. Co-relation of flight data with planned profile, chart overlays, traffic, wind, atmospheric conditions and/or ATC/airport restrictions provides a holistic view of the influencing factors of the flight.

For example, FIG. 3A depicts an exemplary display of flight information, such as flight information taken from QAR data. FIG. 3A shows a flight landing at the Phoenix Sky Harbor airport. Flight information in FIG.3A is graphed as altitude vs. distance to runway. In the example shown in FIG. 3A, flight information includes a planned profile, a flight profile, notations of high sink rate, and an indication where landing gear is deployed. An aircraft pitch angle and the threshold is also displayed. Contextual information displayed includes the radar zone (e.g., JAGAL,PRUNN, and DELSE), and runway information (indicating runway 26).

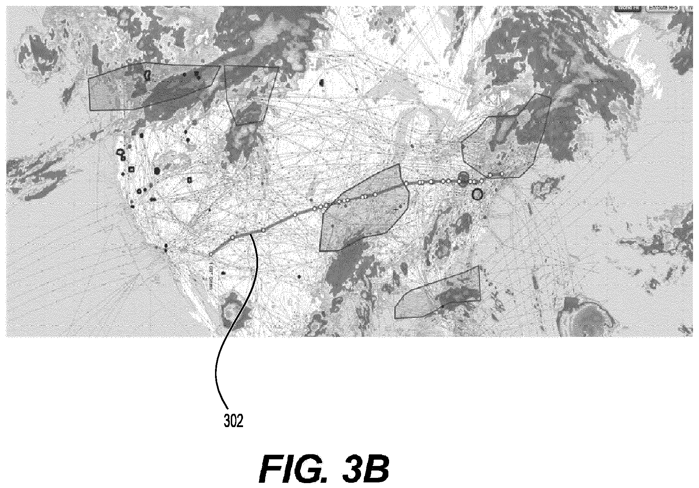

FIG. 3B depicts another exemplary display of an aircraft trajectory 302, overlaid with wind data. Such wind data provides important context to the parameters of the aircraft's travel. For example, the wind data provides context to parameters such as those shown in FIG. 3A. In an example, consideration of wind data permits an analyst to determine whether or not an event outside of SOPs occurred.

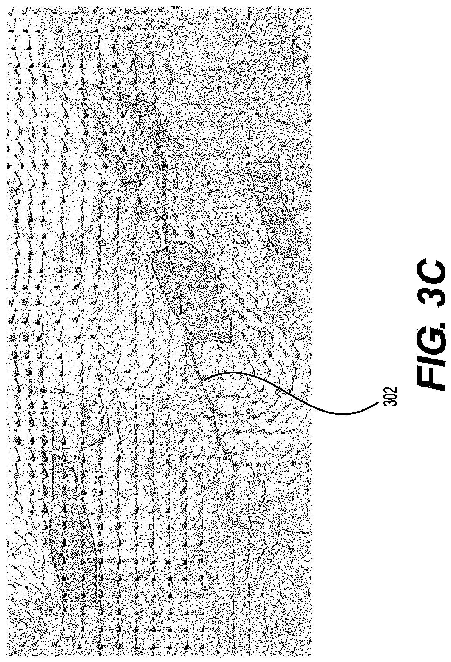

FIG. 3C depicts another exemplary display of an aircraft trajectory 302, overlaid with weather data (e.g., SIGMENT data and/or radar data). Such weather data provides important context to the parameters of the aircraft's travel. For example, the weather data provides context to parameters such as those shown in FIG. 3A. In an example, consideration of weather data permits an analyst to determine whether or not an event outside of SOPs occurred.

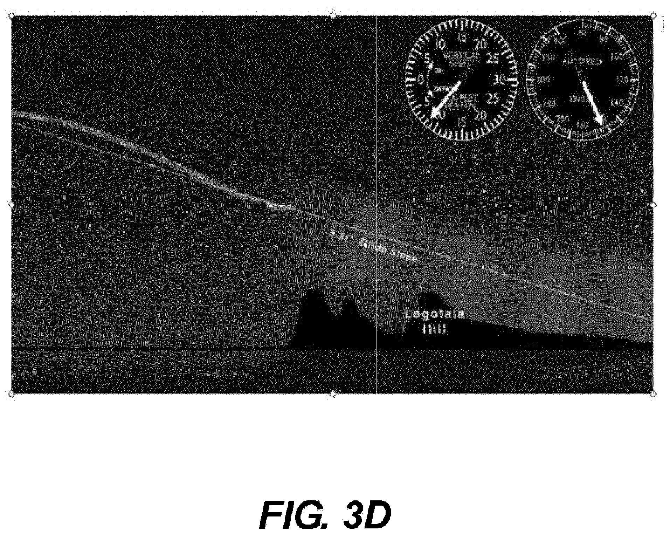

FIG. 3D shows another exemplary display demonstrating the importance of context data. As shown in FIG. 3D, as a flight passes into an outflow boundary, airspeed suddenly increases. The outflow boundary is shown by any suitable mechanism, such as lighter shading on FIG. 3D. The information regarding the outflow boundary provides important context regarding the aircraft speed. Absent the presence of the outflow boundary, the speed increase may result in a finding that the flight was outside of SOPs. The presence of the outflow boundary accounts for the speed increase and informs conclusions about whether the aircraft was actually outside of SOPs.

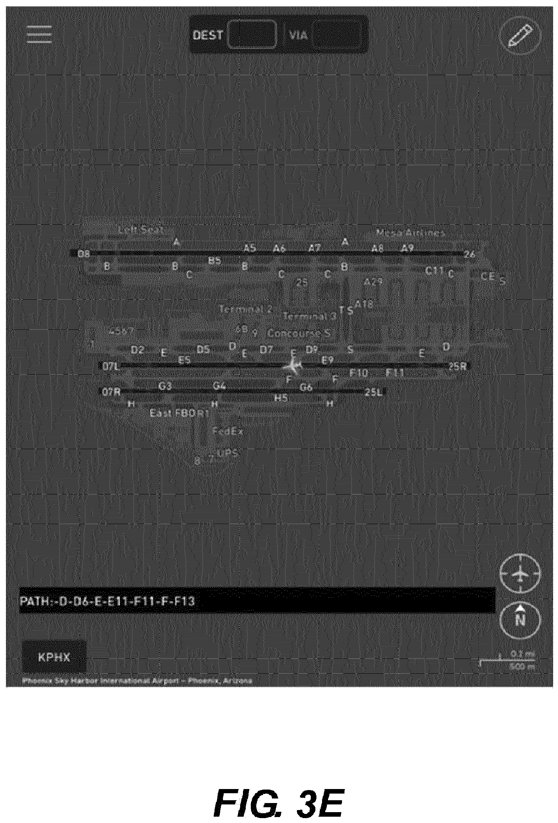

FIG. 3E depicts the detection of contextual data from QAR data. For example, FIG. 3E displays the taxiway at an airport, wherein the taxiway information is derived from QAR data supplied by aircrafts operating at the airport. Detection of a taxiway and/or runway provides context for an aircraft's behavior. For example, when an aircraft is taxiing on a runway, a high taxi speed is interpreted as being in accordance with SOPs requiring an aircraft to exit a runway as quickly as possible. Such speeds in a normal taxiing context give rise to assessments that the flight is outside of SOPs, but those same speeds in a different context are within SOPs.

Although FIGs. 3A-3E show an exemplary display, in some implementations, FIGs 3A-3E may include additional user interface elements, fewer user interface elements, different user interface elements, or differently arranged user interface elements than those depicted in FIGs. 3A-3E.

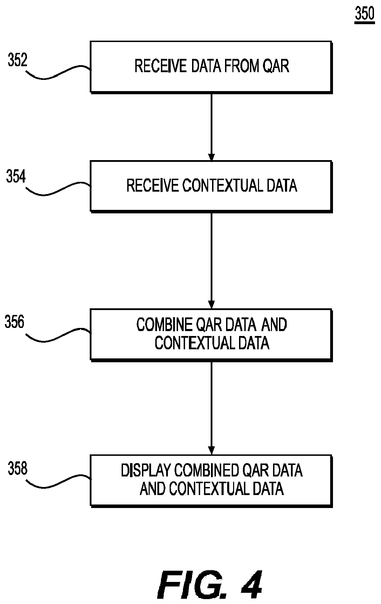

FIG. 4 depicts a flowchart for combining QAR data with contextual information during FDM tasks according to a method 350. In step 352, data may be received from a QAR (such as QAR 122). Contextual data may be received in step 354 from any relevant source. In some examples, contextual data is derived from the data from the QAR. Alternatively, the contextual data may be obtained from information sources such as ground-based or vehicle-based systems. In step 356, the contextual data is combined with the textual data. In step 358, the combined data is output to, for example, a display used by a party performing the FDM tasks.

The embodiments of FIGS. 1A-2B and 3A-4 are not exclusive and may be combined. For example, the contextual information described with respect to FIGS. 3 and 4 may include data from FMS 114, described with respect to FIGS. 1-2. Data integration engine 150, described with respect to FIGS. 1A-2B, may further receive and merge the contextual information described with respect to FIGS. 3A-4. Reports may be generated that incorporate all of FMS 114 data, QAR 122 data, and contextual information.

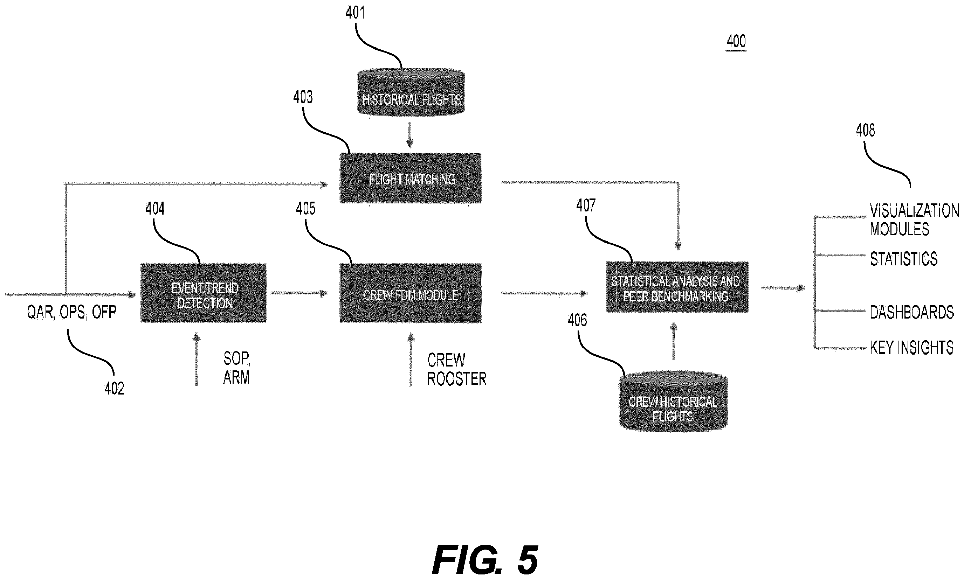

FIG. 5 depicts a flowchart of an exemplary method 400 of the pilot FDM system, according to one aspect of the present disclosure. Method 400 begins at step 401 where historical flights information and QAR, OPS, and OFP data (step 402) are transmitted to flight matching module at step 403. QAR, OPS, and OFP data, along with SOP and AFM data are also be transmitted to the event/trend detection module at step 404. After the data have been received by the event/trend detection module, the crew rooster is transmitted to the crew FDM module at step 405. At step 406 the crew historical flights information is transmitted to statistical analysis and peer benchmarking module. The data from the flight matching module, event/trend detection module, and crew FDM module is also be transmitted to the statistical analysis and peer benchmarking module at step 407. The statistical analysis and peer benchmarking module then outputs data to the visualization modules, statistics module, dashboard, and key insights at step 408.

The pilot FDM system operation is described as follows. An algorithm in a post flight data analytics solution may be executed which detects the operating crew for a given flight and performs checks for any events, trends and exceedances. For example, this includes against the AFMs, SOPs, peer average comparisons, etc. The system then applies advanced filters on historic data repository to identify flights that are closer to the flight with events and performs co-relative analytics to identify the gaps/inactions/incorrect actions/ as improvement opportunities. It also performs tail specific What-If analysis to identify if a specific action could have resulted in avoiding an event of a bigger barrier towards safety exceedances.

After all these analytics, the system automatically identifies the KPIs for improvement and presents to the specific crew for retrospection and mitigation. The system provides all the specific information and interactive query options to review the specific information to baseline the exact flight situation (aircraft state, contextual information) where the crew needs to work and improve the actions. A unique color or numeric coding is also be provided based on the criticality and severity of the KPIs based on risk assessment of the identified KPIs.

Furthermore, the system also provides tools to manage improvements in sync with the airline training rhythms to close the loop on KPIs both in simulator and in line flying. The system provides smart preventive advisories if in any specific flight a situation correlative to the identified improvement for the specific crew is identified. This solution is a closed loop system which continuously refines the KPIs and metrics as and when new flight information gets added.

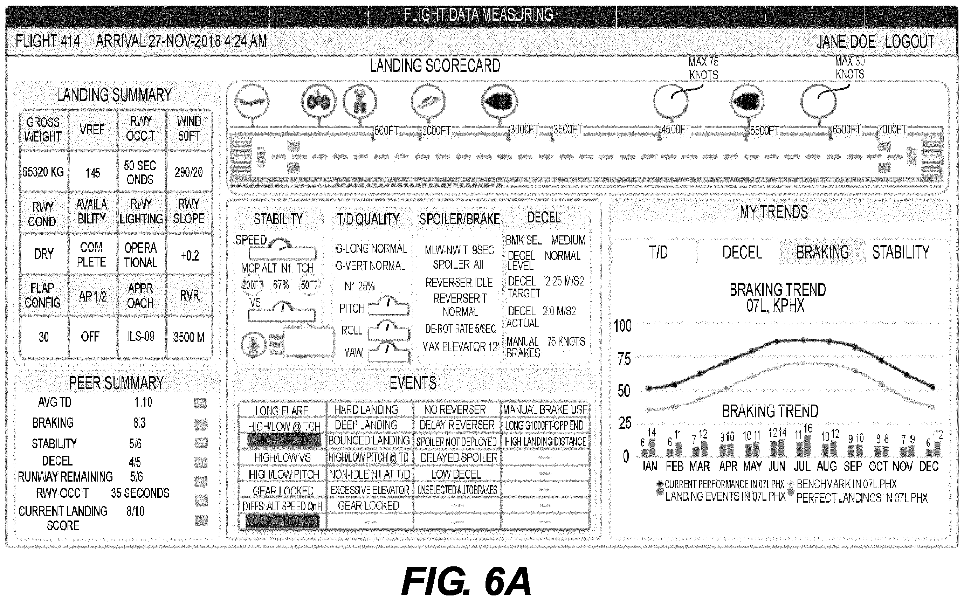

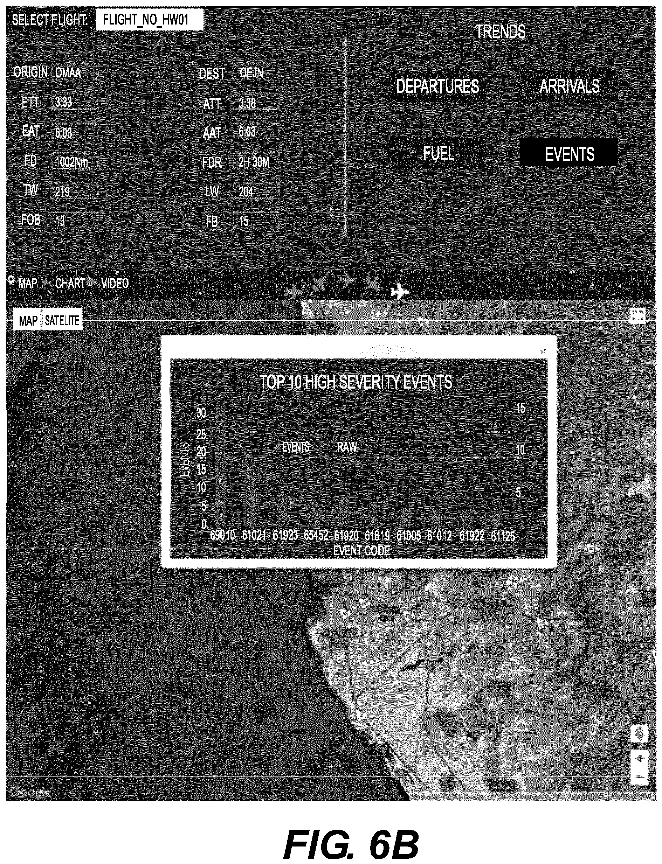

FIGs. 6A and 6B depict an exemplary user interface of the pilot FDM system, according to one aspect of the present disclosure. FIG. 6A depicts an example user interface display dashboard showing the KPIs of a flight. The dashboard includes a landing scorecard, showing the crew a grading of the landing sequence. The dashboard displays other performance indicators such as landing summary, peer summary, stability, T/D Quality, Spoiler/Brake, Decel, Events, and trend graphs. FIG. 6B depicts an exemplary visualization interface, allowing the screw to view events that may have occurred during the flight and create graphs or rank the data in a specific order.

Although FIGs. 6A and 6B show an exemplary user interface, in some implementations, FIGs. 6A and 6B may include additional user interface elements, fewer user interface elements, different user interface elements, or differently arranged user interface elements than those depicted in FIGs. 5A and 5B.

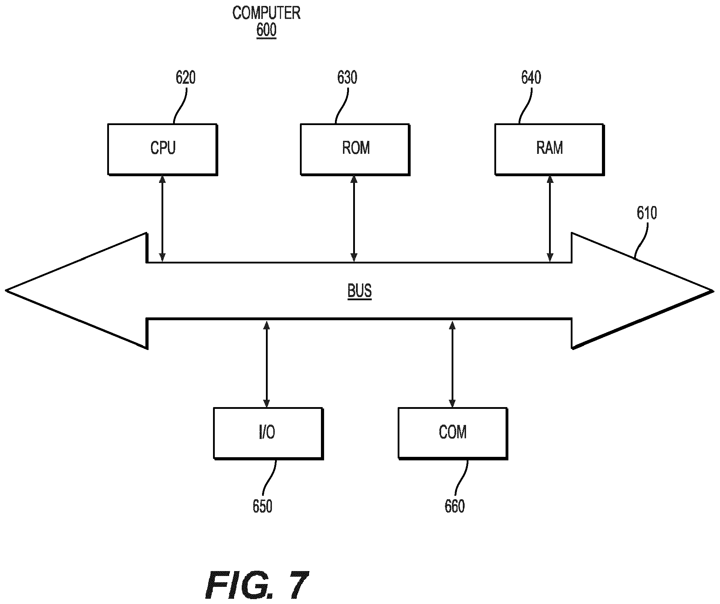

FIG. 7 depicts a high-level functional block diagram of an exemplary computer device or system, in which embodiments of the present disclosure, or portions thereof, may be implemented, e.g., as computer-readable code. In some implementations, the airline repository (depicted in FIG. 1) may correspond to device 600. Additionally, each of the exemplary computer servers, databases, user interfaces, modules, and methods described above with respect to FIGS. 1-5 can be implemented in device 600 using hardware, software, firmware, tangible computer readable media having instructions stored thereon, or a combination thereof and may be implemented in one or more computer systems or other processing systems. Hardware, software, or any combination of such may implement each of the exemplary systems, user interfaces, and methods described above with respect to FIGS. 1-4.

If programmable logic is used, such logic may be executed on a commercially available processing platform or a special purpose device. One of ordinary skill in the art may appreciate that embodiments of the disclosed subject matter can be practiced with various computer system configurations, including multi-core multiprocessor systems, minicomputers, mainframe computers, computers linked or clustered with distributed functions, as well as pervasive or miniature computers that may be embedded into virtually any device.

For instance, at least one processor device and a memory may be used to implement the above-described embodiments. A processor device may be a single processor or a plurality of processors, or combinations thereof. Processor devices may have one or more processor "cores."

Various embodiments of the present disclosure, as described above in the examples of FIGS. 1-7, may be implemented using device 600. After reading this description, it will become apparent to a person skilled in the relevant art how to implement embodiments of the present disclosure using other computer systems and/or computer architectures. Although operations may be described as a sequential process, some of the operations may in fact be performed in parallel, concurrently, and/or in a distributed environment, and with program code stored locally or remotely for access by single or multi-processor machines. In addition, in some embodiments the order of operations may be rearranged without departing from the spirit of the disclosed subject matter.

As shown in FIG.7, device 600 may include a central processing unit (CPU) 620. CPU 620 may be any type of processor device including, for example, any type of special purpose or a general-purpose microprocessor device. As will be appreciated by persons skilled in the relevant art, CPU 620 also may be a single processor in a multi-core/multiprocessor system, such system operating alone, or in a cluster of computing devices operating in a cluster or server farm. CPU 620 may be connected to a data communication infrastructure 610, for example, a bus, message queue, network, or multi-core message-passing scheme.

Device 600 also may include a main memory 640, for example, random access memory (RAM), and also may include a secondary memory 630. Secondary memory 630, e.g., a read-only memory (ROM), may be, for example, a hard disk drive or a removable storage drive. Such a removable storage drive may comprise, for example, a floppy disk drive, a magnetic tape drive, an optical disk drive, a flash memory, or the like. The removable storage drive in this example reads from and/or writes to a removable storage unit in a well-known manner. The removable storage unit may comprise a floppy disk, magnetic tape, optical disk, etc., which is read by and written to by the removable storage drive. As will be appreciated by persons skilled in the relevant art, such a removable storage unit generally includes a computer usable storage medium having stored therein computer software and/or data.

In alternative implementations, secondary memory 630 may include other similar means for allowing computer programs or other instructions to be loaded into device 600. Examples of such means may include a program cartridge and cartridge interface (such as that found in video game devices), a removable memory chip (such as an EPROM, or PROM) and associated socket, and other removable storage units and interfaces, which allow software and data to be transferred from a removable storage unit to device 600.

Device 600 also may include a communications interface ("COM") 660. Communications interface 660 allows software and data to be transferred between device 600 and external devices. Communications interface 660 may include a modem, a network interface (such as an Ethernet card), a communications port, a PCMCIA slot and card, or the like. Software and data transferred via communications interface 660 may be in the form of signals, which may be electronic, electromagnetic, optical, or other signals capable of being received by communications interface 660. These signals may be provided to communications interface 660 via a communications path of device 600, which may be implemented using, for example, wire or cable, fiber optics, a phone line, a cellular phone link, an RF link or other communications channels.

The hardware elements, operating systems and programming languages of such equipment are conventional in nature, and it is presumed that those skilled in the art are adequately familiar therewith. Device 600 also may include input and output ports 650 to connect with input and output devices such as keyboards, mice, touchscreens, monitors, displays, etc. Of course, the various server functions may be implemented in a distributed fashion on a number of similar platforms, to distribute the processing load. Alternatively, the servers may be implemented by appropriate programming of one computer hardware platform.

The systems, apparatuses, devices, and methods disclosed herein are described in detail by way of examples and with reference to the figures. The examples discussed herein are examples only and are provided to assist in the explanation of the apparatuses, devices, systems, and methods described herein. None of the features or components shown in the drawings or discussed below should be taken as mandatory for any specific implementation of any of these the apparatuses, devices, systems, or methods unless specifically designated as mandatory. For ease of reading and clarity, certain components, modules, or methods may be described solely in connection with a specific figure. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such. Any failure to specifically describe a combination or sub-combination of components should not be understood as an indication that any combination or sub-combination is not possible. It will be appreciated that modifications to disclosed and described examples, arrangements, configurations, components, elements, apparatuses, devices, systems, methods, etc. can be made and may be desired for a specific application. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Throughout this disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context.

It is intended that the specification and examples be considered as exemplary only, with a true scope and spirit of the disclosure being indicated by the following claims.

## Claims

1. A computer-implemented method for integration of data into flight data monitoring, the method comprising:
receiving quick access recorder data from an aircraft;
receiving flight management system data from the aircraft;
combining the quick access recorder data and the flight management system data to form combined data; and
displaying the combined data on a user device.

2. The computer-implemented method of claim 1, further comprising:
receiving operational flight plan data; and
combining the operational flight plan data with the quick access recorder data and the flight management system data to form the combined data.

3. The computer-implemented method of claim 1, further comprising creating a report from the combined data, and wherein displaying the combined data includes displaying the report.

4. The computer-implemented method of claim 1, wherein the combining the quick access recorder data and the flight management system data includes performing registration of the data at a plurality of times.

5. The computer-implemented method of claim 1, wherein the flight management system data and the quick access recorder data is received after completion of a flight.

6. The computer-implemented method of claim 1, wherein the flight management system data include at least one of periodic trajectory 4D reports, flight summary, and pilot button push data.

7. The computer-implemented method of claim 1, further includes receiving contextual data including at least one of time, season, visibility, wind, weather parameters, and traffic parameters.

8. The computer-implemented method of claim 7, wherein the combining step further includes combining the contextual data to form the combined data.

9. The computer implemented method of claim 1, further comprising analyzing the combined data to identify errors in programming of a flight management system generating the flight management system data.

10. A computer-implemented system for integration of data into flight data monitoring, the computer-implemented system comprising:
a memory having processor-readable instructions stored therein; and
at least one processor configured to access the memory and execute the processor-readable instructions, which when executed by the processor configures the processor to perform functions for:
receiving quick access recorder data from an aircraft;
receiving flight management system data from the aircraft;
combining the quick access recorder data and the flight management system data to form combined data; and
displaying the combined data on a user device.

11. The computer-implemented system of claim 10, wherein the functions further include:
receiving operational flight plan data; and
combining the operational flight plan data with the quick access recorder data and the flight management system data to form the combined data.

12. The computer-implemented system of claim 10, wherein the functions further include:
creating a report from the combined data, and wherein displaying the combined data includes displaying the report.

13. The computer-implemented system of claim 10, wherein the flight management system data include at least one of periodic trajectory 4D reports, flight summary, and pilot button push data.

14. The computer-implemented system of claim 10, wherein the functions further include: receiving contextual data including at least one of time, season, visibility, wind, weather parameters, and traffic parameters, and wherein the combining step further includes combining the contextual data to form the combined data.

15. The computer-implemented system of claim 10, wherein the functions further include: analyzing the combined data to identify errors in programming of a flight management system generating the flight management system data.
